# EUROPÄISCHE PATENTANMELDUNG

(11) **EP 3 550 196 A1**
(43) Veröffentlichungstag der Anmeldung: **09.10.2019**
(21) Anmeldenummer: 19164326.1
(22) Anmeldetag: 21.03.2019
(51) Int. Cl.: F16L 27/087, B33Y 80/00, F16L 39/06

(54) **DREHDURCHFÜHRUNG**

(30) Priorität: 06.04.2018 DE 102018108164
(71) Anmelder: Tries GmbH & CO. KG, 89584 Ehingen (DE)
(72) Erfinder: Neubauer, Felix, 89584 Ehingen (DE)
(74) Vertreter: Otten, Roth, Dobler & Partner mbB Patentanwälte

(57) **Zusammenfassung**

Vorgeschlagen wird eine Drehdurchführung (1) zur fluidleitenden Verbindung einer ersten (2, 3, 4) und zweiten Druckmittelleitung (14, 15, 16), die zueinander drehbar gelagert sind, wobei die erste Druckmittelleitung (2, 3, 4) in einer Welle (W) angeordnet ist, und wobei die erste Druckmittelleitung (2, 3, 4) einen ersten Anschluss (5, 6, 7) zur Fluidübergabe an die zweite Druckmittelleitung umfasst, wobei die zweite Druckmittelleitung einen zweiten Anschluss (11, 12 ,13) zur Übergabe des Fluids über den ersten Anschluss aufweist, wobei der erste Anschluss und der zweite Anschluss auf der gleichen Höhe in Bezug zur Drehachse (D) angeordnet sind. Zur Verringerung des Strömungswiderstands weist der erste Anschluss (5, 6, 7) wenigstens einen Leitungskanal zur Fluidleitung auf, der in seinem Inneren wenigstens eine Stromlinie als Ortskurve beim Durchlauf eines Fluidelements beschreibt, die von einer senkrecht durch die Drehachse verlaufenden Linie wenigstens abschnittsweise abweicht.

## Beschreibung

Die Erfindung betrifft eine Drehdurchführung zur fluidleitenden Verbindung von Druckmittelleitungen nach dem Oberbegriff des Anspruchs 1.

Aus dem Stand der Technik ist beispielsweise aus der DE 103 29 191 A1 eine Drehdurchführung für Druckmittel bekannt, die eine Verbindung zwischen der Druckmittelleitung und dem dazugehörigen Ringkanal über Öffnungen der Zentralhülse sowie eine radiale Bohrung in der Hohlwelle herstellt.

Aufgabe der Erfindung ist es, eine Drehdurchführung bereitstellen zu können, welche einen besonderes geringen Strömungswiderstand sowie insbesondere eine homogenere Druckverteilung ermöglicht.

Die Aufgabe wird, ausgehend von einer Drehdurchführung der eingangs genannten Art, durch die kennzeichnenden Merkmale des Anspruchs 1 gelöst.

Durch die in den abhängigen Ansprüchen genannten Maßnahmen sind vorteilhafte Ausführungen und Weiterbildungen der Erfindung möglich.

Die erfindungsgemäße Drehdurchführung dient der fluidleitenden Verbindung wenigstens zweier Druckmittelleitungen, die im Folgenden jeweils als erste und zweite Druckmittelleitung bezeichnet werden. Entsprechend sind die Druckmittelleitungen relativ zueinander drehbar gelagert, wobei die erste Druckmittelleitung in einer Welle angeordnet ist, welche wiederum um eine Drehachse drehbar gelagert ist. Die Welle kann also relativ zu dem Teil der Maschine, in dem die zweite Druckmittelleitung angeordnet ist, rotieren. Die erste Druckmittelleitung in der Welle ermöglicht also eine Fluidleitung entlang der Welle bzw. Drehachse. Durch die Drehdurchführung wird erreicht, dass eine Fluidübergabe zwischen den genannten Druckmittelleitungen erfolgen kann, obgleich beide Druckmittelleitungen relativ zueinander rotieren. Die Übergabe des Fluids erfolgt über einen ersten Anschluss der ersten Druckmittelleitung. Entsprechend dazu umfasst die zweite Druckmittelleitung einen zweiten Anschluss zur Fluidübergabe zwischen beiden Anschlüssen.

In Bezug auf die Drehachse sind erster und zweiter Anschluss auf der gleichen Höhe angeordnet, um das Fluid an einem FluidÜbergabebereich zwischen erstem und zweitem Anschluss, d.h. vom ersten zum zweiten Anschluss oder umgekehrt zu übergeben.

Die erfindungsgemäße Drehdurchführung zeichnet sich insbesondere dadurch aus, dass der erste Anschluss wenigstens einen Leitungskanal zur Fluidleitung aufweist, der in seinem Inneren wenigstens eine Stromlinie als Ortskurve beim Durchlauf eines Fluidelements beschreibt, die von einer senkrecht durch die Drehachse verlaufenden Linie wenigstens abschnittsweise, insbesondere vollständig abweicht. Insofern weicht also der Fluss des Fluid bzw. wenigstens eines Fluidelements bei der Übergabe zwischen den Druckmittelleitungen von einem rein radialen Verlauf (senkrecht zur Drehachse) ab.

Druckmittelleitungen und Anschlüsse können grundsätzlich jeweils als separat hergestellte, aber miteinander verbundene Bauteile, oder als ein einzelnes, ggf. miteinander verschmolzenes Bauteil ausgebildet sein.

Unter einem Fluid wird regelmäßig ein flüssiges oder gasförmiges Medium verstanden. In der Hydrodynamik kann der gesamte Strom des Fluids als Fluss einzelner massebehafteter Teilchen in Form von Fluidelementen beschrieben werden. Je nach Art des Fluids handelt es sich dabei zum Beispiel um Moleküle, gegebenenfalls auch einzelne Atome oder ein Gemenge aus einem Fluid und sonstigen festen oder flüssigen Partikeln oder dergleichen. Jedes dieser Fluidelemente beschreibt bei seinem Fluss eine Stromlinie als Ortskurve. Diese Stromlinie hängt insbesondere von der Geometrie der Druckmittelleitungen ab. Treten zum Beispiel geometrisch im Querschnitt der Druckmittelleitungen Verengungen auf, so ist in diesem Bereich auch die Dichte der Stromlinien in der Regel höher, d.h. die Flussdichte steigt dort an und die Menge an strömendem Medium, das pro Zeiteinheit durch die entsprechende Querschnittfläche im Bereich der Verengung hindurchtritt, wird größer.

Würde die Fluidübergabe in einer vollständig radial verlaufenden Leitung erfolgen, so wären hier auch die Stromlinien entsprechend in radialer Richtung ausgerichtet. Dies soll gemäß der Erfindung gerade vermieden werden. Berücksichtigt man zum Beispiel, dass sich die Welle relativ zu dem Teil dreht, in dem die zweite Druckmittelleitung angeordnet ist, so besitzt jedes Fluidelement, das sich auf eine nicht vollständig radial ausgerichteten Ortskurve im Anschluss bewegt, auch eine Geschwindigkeitskomponente, die tangential zum Außenrand der Welle verläuft, an dem schließlich auch die Fluidübergabe stattfindet. Analog verhält es sich, wenn in umgekehrter Richtung das Fluid sich zum drehenden Teil der Welle hin bewegt. In diesem Fall besitzt die Geschwindigkeit der sich drehenden Welle eine entsprechende Tangentialkomponente relativ zur Bewegungsrichtung des Fluidelements.

Daher wird im Allgemeinen, wenn keine Maßnahmen getroffen sind, welche die Strömung des Fluidelements anpassen, das Fluidelement bei der Übergabe umgelenkt, also beschleunigt bzw. abgebremst wird. Der Strömungswiderstand kann also deutlich verringert werden. Darüber hinaus kann durch diese Anordnung auch eine Platzeinsparung ermöglicht werden, da gegebenenfalls die Fluidübergabe auch innerhalb einer Ebene erfolgen kann, also möglichst auf direktem Weg.

Je nach Ausführungsvariante der Erfindung kann die Krümmung des wenigstens einen Leitungskanals bzw. der Stromlinie des ersten Anschlusses in Drehrichtung oder entgegengesetzt zur Drehrichtung der Welle erfolgen. Erfolgt die Krümmung entgegen der Drehrichtung, so wird die Ortskurve des Fluidelements im Bereich der Welle dem im Vergleich zur Welle stehenden Teil angepasst. Ein zum Beispiel von der Welle kommendes Fluidelement wird auf der gekrümmten Bahn gewissermaßen entgegen der Drehrichtung beschleunigt. Hierdurch erfolgt somit eine Anpassung gegenüber dem zweiten Anschluss, der im Vergleich zur Welle ruht. Erfolgt in einem solchen Fall die Krümmung in Drehrichtung, so wird die Strömung des Fluidelements und dessen Beschleunigung durch die Drehung gewissermaßen unterstützt. Hierdurch kann gegebenenfalls eine Wirbelbildung bei der Fluidübergabe verringert werden. Insgesamt kann der Strömungswiderstand wiederum verringert werden.

Um gerade im Bereich der Fluidübergabe einen verringerten Strömungswiderstand zu ermöglichen, kann auch beim Übergang zwischen den beiden Anschlüssen einer der Anschlüsse in seiner Querschnittsfläche vergrößert werden, bzw die Stromliniendichte wird verringert. Diese verbesserte Übergabe berücksichtigt, dass ohnehin bei relativ sich zueinander drehenden Teilen Fluidelemente in irgendeiner Form beschleunigt werden, d.h. dies führt zu einem entsprechenden Strömungswiderstand. In diesem Bereich kann durch die beschriebene Ausführungsform sodann aber der Widerstand vorteilhafterweise verringert. Ferner kann lokal in diesem Bereich auch die Strömungsgeschwindigkeit verringert werden.

Es wurde bereits angesprochen, dass eine platzsparende Fluidübergabe zum Beispiel dann möglich ist, wenn die Anschlüsse, zwischen denen die Fluidübergabe stattfindet, in Bezug auf die Drehachse auf gleicher Höhe ausgebildet sind. Jeder Anschluss weist entsprechend einen Fluidübergabebereich auf. Um eine möglichst effektive und zentrale Fluidübergabe mit möglichst geringem Strömungswiderstand zu ermöglichen, kann bei der bevorzugten Weiterbildung der Erfindung nicht nur ein, sondern mehrere Anschlüsse auf Seiten einer Druckmittelleitungen vorgesehen sein. Hierdurch wird (gerade im Bereich eines die Welle umgebenden Ringkanals) auch eine homogenere Druckverteilung erreicht. Gleichzeitig entspricht die Möglichkeit, eine Druckmittelleitungen in mehrere Anschlüsse aufzuspalten, im Grunde auch der Maßnahme, den Anschlussquerschnitt zu erhöhen, da eine Aufspaltung in mehrere Anschlüsse auch gleichzeitig mit einer Querschnittserhöhung verbunden sein kann.

Grundsätzlich kann eine Drehdurchführung aber auch nicht nur eine Fluidleitung betreffen, sondern es ist insbesondere auch notwendig, zum Beispiel elektrische Leitungen über eine Drehdurchführung zu führen. Elektrische Leitungen können z.B. über einen Schleifkontakt eine leitende Verbindung zwischen Welle und stehendem Maschinenteil herstellen. Insbesondere dann, wenn eine Vielzahl unterschiedlicher Leitungen durch eine sich drehende Welle hindurchgeführt werden müssen, ist es besonders vorteilhaft, Platz einzusparen und die Kompaktheit der entsprechenden Maschine beizubehalten, ohne dass zusätzliche Bauraum allein zur Leitungsführung bereitgestellt werden muss. Bei einer Ausführungsvariante der Erfindung kann daher zwischen jeweils zwei nebeneinander liegenden Leitungskanälen ein Durchführungskanal zur Durchführung eines Kabels bzw. einer Druckmittelleitungen entlang der Welle/Drehachse vorgesehen sein. Die Drehdurchführung kann also eine Durchführung unterschiedlicher Medien bzw. Leitungen ermöglichen.

Bei der Weiterbildung der Erfindung kann die erste Druckmittelleitung außerhalb des Bereichs des ersten Anschlusses einen Verlauf aufweisen, der zumindest abschnittsweise von einem parallelen Verlauf zur Drehachse abweicht. Durch diese Maßnahme kann zunächst eine Platzsparung erreicht werden, weil die entsprechende Druckmittelleitungen nicht die Durchführung anderer Leitungen, sei es anderer fluidleitender Gefäße oder weiterer elektrischer Leitungen, blockiert. Wenn alle Leitungen einer Drehdurchführung einen vollständig geraden Verlauf entlang der Drehachse aufweisen und an der gleichen Position in die Welle hineinlaufen bedeutet dies grundsätzlich, dass eine Leitung, die eine entsprechende Position einnimmt, diese auch im Verlauf parallel zur Drehachse weiter besetzt ist, selbst wenn die Druckmittelleitung relativ kurz ausgebildet ist und bereits eine Fluidübergabe an die zweite Druckmittelleitung stattgefunden hat. Auf diese Weise kann somit die Drehdurchführung auch für verschiedene Arten von Leitungen in kompakter Weise realisiert werden.

Insgesamt eignen sich Drehdurchführung gemäß der Erfindung nicht nur zur Realisierung einer kompakten Bauweise, sondern sie können auch sehr gut für den Leichtbau verwendet werden. Hinzu kommt, dass ein verschachtelter Aufbau von Drehdurchführungsleitungen in einer Welle mitunter sehr konsequent realisiert werden muss und zuvor sehr genau zu planen ist. Um sowohl die Ausführung der Konstruktion als auch die Realisierung in Leichtbauweise zu vereinfachen bzw. zu verbessern, ist es vorteilhaft, die Drehdurchführung wenigstens teilweise, insbesondere vollständig durch ein additives Fertigungsverfahren wie zum Beispiel einen 3-D-Druck auszuführen. Auf diese Art und Weise kann der Leitungsverlauf zuvor sehr genau geplant und umgesetzt werden. Zudem bereitet es dann in der Regel weniger Schwierigkeiten, die Leitungen in der geplanten Weise tatsächlich unterzubringen, da ein entsprechender additiver Aufbau gewissermaßen schichtweise umgesetzt werden kann. 3-D-Druckverfahren können unterdessen nicht nur für den Kunststoff-Druck verwendet werden, sondern es können auch Metalle gedruckt werden.

In besonders vorteilhafter Weise wird auch ermöglicht, lediglich teilweise ein additives Fertigungsverfahren zu verwenden, also eine Art Hybridbauweise zu benutzen. Standardbauteile wie zum Beispiel Anschlüsse können nach Beendigung des additiven Fertigungsverfahrens zum Beispiel an die gedruckten oder in sonstiger Weise additiv hergestellten Leitungen angeschlossen werden. Gleiches gilt für sonstige Passstücke. Darüber hinaus ist es möglich, Leitungen oder sonstige Verbindungsteile an derartige vorgefertigte Bauteile wie Anschlüsse oder Passstücke unmittelbar zu drucken und den Leitungsverlauf fortzusetzen.

### Ausführungsbeispiele

Ausführungsbeispiele der Erfindung sind in den Zeichnungen dargestellt und werden nachstehend unter Angabe weiterer Einzelheiten und Vorteile näher erläutert.

Im Einzelnen zeigen:
- Figur 1:: eine schematische Darstellung einer Drehdurchführung gemäß der Erfindung, sowie
- Figur 2:: eine weitere Darstellung der Drehdurchführung aus Fig. 1 mit einem Schnitt durch einen der zentralen Knotenpunkte.

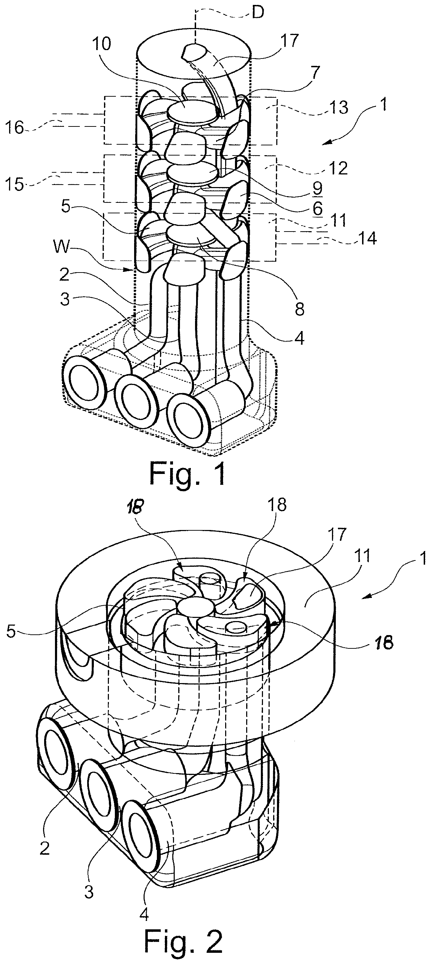

Figur 1 zeigt eine Drehdurchführung 1 gemäß der Erfindung mit ersten Druckmittelleitungen 2, 3, 4, die in einer Welle W angeordnet sind. Im oberen Bereich der Figur 1 münden die jeweiligen ersten Druckmittelleitungen 2, 3, 4 in den ersten Anschlüssen 5, 6, 7. Diese drei Anschlüsse 5, 6, 7 sind die für jede der Druckmittelleitungen 2, 3, 4 in 6 Teilanschlüsse aufgeteilt, welche wiederum über den gesamten Umfang der Welle W in gleichen Winkelabständen verteilt sind. Dazu münden die Druckmittelleitungen 2, 3,4 jeweils in zentrale Knotenpunkte 8, 9, 10, aus denen die jeweiligen ersten Anschlüsse 5, 6, 7 sich jeweils verzweigen. Diese ersten Anschlüsse 5, 6, 7 reichen bis zum Rand der Welle W.

Dort wird die Welle jeweils in Höhe der Anschlüsse 5, 6, 7 jeweils von zweiten Anschlüssen 11, 12, 13 in Form von Ringkanälen umgeben. Aus diesen Ringkanälen 11, 12, 13 wiederum führen zweite Druckmittelleitungen 14, 15, 16 heraus. Die Druckmittelleitungen 2, 3,4 verlaufen nicht stets parallel zur Drehachse D, sodass diese kompakt innerhalb der Welle W untergebracht werden können. Dadurch, dass die ersten Anschlüsse 5, 6, 7 in sechs Abschnitte aufgeteilt sind, können die Zwischenräume zwischen den jeweiligen Teilabschnitten auch zur Durchführung weiterer Leitungen verwendet werden. Im vorliegenden Fall ist ein Stromkabel 17 durch diese Lücke geführt. Auch das Stromkabel besitzt dementsprechend keinen Verlauf, der vollständig parallel zur Drehachse D ausgerichtet ist.

Blickt man in Figur 1 von oben, in Richtung der Drehachse D auf die Drehdurchführung 1, so sind die ersten Anschlüsse linksgekrümmt ausgebildet. Zum Mantelbereich der Welle W hin verbreitern sich die ersten Anschlüsse 5, 6, 7 in ihrem Querschnitt. Insgesamt sind die jeweiligen ersten Anschlüsse 5, 6, 7 jeweils in Bezug zur Drehachse D auf gleicher Höhe bzw. jeweils in einer Ebene angeordnet. Das Fluid, das beispielsweise durch die erste Druckmittelleitung 2 fließt, gelangt zunächst in den ersten zentralen Verteilungsknoten 8 und teilt sich dann auf in die jeweiligen Teilanschlüsse des ersten Anschlusses 5. Erst dann gelangt es in den Ringkanal 11, der den zweiten Anschluss außerhalb der Welle W bildet, und kann über die Druckmittelleitungen 14 weiterfließen. Solange eine der Druckmittelleitungen keine weitere Leitungsführung behindert, kann diese parallel zunächst zur Drehachse D verlaufen. Zum zentralen Knoten 8 hin muss die Druckleitung 2 jedoch von einer Führung parallel zur Drehachse abbiegen, um diesen Knotenpunkt 8 zu erreichen. Folgt man den Fluidleitungen (in der Darstellung nach Fig. 1 von unten nach oben), so ist die Druckmittelleitung 2 auch die erste, die auch über die Drehdurchführung aus der Welle W herausgeführt wird. Insofern können auch weitere Leitungen im Anschluss daran zum Beispiel an der Position innerhalb der Welle W der 1. Druckmittelleitungen 2 geführt werden. In Figur 2 wiederum ist ein weiterer Schnitt durch die oben angeführte Drehdurchführung 1 gezeigt, bei dem insbesondere auch die im Bereich der ersten Anschlüsse 5 vorhandenen Durchführungskanäle 18 dargestellt werden. Entsprechend werden über die Durchführungskanäle 18 die Kabeldurchführung 17 und die (ersten) Druckmittelleitungen 3, 4 hindurchgeführt.

Durch die in den Figuren 1 und 2 dargestellte Krümmung der jeweiligen ersten Anschlüsse 5, 6, 7 sind auch die Ortskurven der Stromlinien durch diese Anschlüsse gekrümmt, sodass das zu leitende Fluid bei der Fluidübergabe entsprechend der relativen Rotationsbewegung zwischen der Welle W und dem äußeren Bereich der Welle W, wo sich die zweiten Druckmittelleitungen 14, 15, 16 bzw. die zweiten Anschlüsse 11, 12, 13 befinden, geführt wird,. Allen Ausführungsbeispielen und Weiterbildungen der Erfindung ist gemeinsam, dass der erste Anschluss wenigstens einen Leitungskanal aufweist, der in seinem Inneren wenigstens eine Stromlinie als Ortskurve beim Durchlauf eines Fluidelements beschreibt, die von einer senkrecht durch die Drehachse verlaufenden Linie wenigstens abschnittsweise, insbesondere vollständig abweicht. Durch diesen nicht radial verlaufenden den Fluidstrom wird ein besonders geringer Strömungswiderstand und eine homogenere Druckverteilung ermöglicht. Darüber hinaus eignet sich eine Drehführung gemäß der Erfindung auch besonders gut dazu, eine kompakte Bauweise zu realisieren und eine Implementierung einer Drehdurchführung in Leichtbauweise zu ermöglichen.

### Bezugszeichenliste:

- 1: Drehdurchführung
- 2: erste Druckmittelleitung
- 3: erste Druckmittelleitung
- 4: erste Druckmittelleitung
- 5: erster Anschluss
- 6: erster Anschluss
- 7: erster Anschluss
- 8: zentraler Verteilerknoten
- 9: zentraler Verteilerknoten
- 10: zentraler Verteilerknoten
- 11: Ringkanal / zweiter Anschluss
- 12: Ringkanal / zweiter Anschluss
- 13: Ringkanal / zweiter Anschluss
- 14: zweite Druckmittelleitung
- 15: zweite Druckmittelleitung
- 16: zweite Druckmittelleitung
- 17: Kabelleitung
- 18: Durchführungskanal
- D: Drehachse

## Patentansprüche

1. Drehdurchführung (1) zur fluidleitenden Verbindung einer ersten (2, 3, 4) und einer zweiten Druckmittelleitung (14, 15, 16), die relativ zueinander drehbar gelagert sind, wobei die erste Druckmittelleitung (2, 3, 4) in einer Welle (W), die um eine Drehachse (D) drehbar ist, angeordnet ist, um eine Fluidleitung entlang der Welle (W) und/oder Drehachse (D) durchzuführen, und wobei die erste Druckmittelleitung (2, 3, 4) einen ersten Anschluss (5, 6, 7) zur Fluidübergabe an die zweite Druckmittelleitung (14, 15, 16) umfasst, wobei die zweite Druckmittelleitung (14, 15, 16) einen zweiten Anschluss (11, 12 ,13) zur Übergabe des Fluids über den ersten Anschluss (5, 6, 7) aufweist, wobei der erste Anschluss (5, 6, 7) und der zweite Anschluss (11, 12 ,13) auf der gleichen Höhe in Bezug zur Drehachse (D) angeordnet sind, um das Fluid an einem Fluidübergabebereich vom ersten (5, 6, 7) zum zweiten Anschluss (11, 12 ,13) und/oder umgekehrt zu übergeben, **dadurch gekennzeichnet, dass** der erste Anschluss (5, 6, 7) wenigstens einen Leitungskanal zur Fluidleitung aufweist, der in seinem Inneren wenigstens eine Stromlinie als Ortskurve beim Durchlauf eines Fluidelements beschreibt, die von einer senkrecht durch die Drehachse (D) verlaufenden Linie wenigstens abschnittsweise abweicht.

2. Drehdurchführung (1) nach Anspruch 1, **dadurch gekennzeichnet, dass** die wenigstens eine Stromlinie von einer senkrecht durch die Drehachse (D) verlaufenden Linie vollständig abweicht.

3. Drehdurchführung (1) nach einem der vorgenannten Ansprüche, **dadurch gekennzeichnet, dass** der zweite Anschluss (11, 12, 13) als Ringkanal ausgebildet ist.

4. Drehdurchführung (1) nach einem der von vorgenannten Ansprüche, **dadurch gekennzeichnet, dass** wenigstens eine Ebene vorhanden ist, die senkrecht zur Drehachse (D) verläuft, wobei der erste Anschluss (5, 6, 7) und der zweite Anschluss (11, 12 ,13) am Fluidübergabebereich und/oder an wenigstens einem der Fluidübergabebereiche in der Ebene verlaufen und der wenigstens eine Leitungskanal des ersten Anschlusses (5, 6, 7) und/oder die wenigstens eine Stromlinie des wenigstens einen Leitungskanals so angeordnet und/oder ausgebildet ist, dass dieser bzw. diese in der Ebene einen gekrümmten Verlauf aufweist / aufweisen.

5. Drehdurchführung (1) nach einem der von vorgenannten Ansprüche, **dadurch gekennzeichnet, dass** die Krümmung des wenigstens einen Leitungskanals und/oder der wenigstens einen Stromlinie des ersten Anschlusses entgegen der oder in Drehrichtung der Welle (W) gekrümmt ist.

6. Drehdurchführung (1) nach einem der von vorgenannten Ansprüche, **dadurch gekennzeichnet, dass** wenigstens abschnittsweise die Stromliniendichte im Leitungskanal des ersten Anschlusses (5, 6, 7) in Richtung des zweiten Anschlusses (11, 12 ,13) abnimmt und/oder wenigstens abschnittsweise die Querschnittsfläche des Leitungskanals in Richtung des zweiten Anschlusses (11, 12, 13) zunimmt.

7. Drehdurchführung (1) nach einem der von vorgenannten Ansprüche, **dadurch gekennzeichnet, dass** die Stromliniendichte im Leitungskanal des ersten Anschlusses (5, 6, 7) in Richtung des zweiten Anschlusses (11, 12, 13) durchgängig abnimmt und/oder die Querschnittsfläche des Leitungskanals in Richtung des zweiten Anschlusses (11, 12, 13) durchgängig zunimmt.

8. Drehdurchführung (1) nach einem der von vorgenannten Ansprüche, **dadurch gekennzeichnet, dass** der erste Anschluss (5, 6, 7) wenigstens zwei Leitungskanäle aufweist, die in Bezug zur Drehachse (D) auf gleicher Höhe angeordnet sind und von denen jeder einen Fluidübergabebereich aufweist, sodass die Fluidübergabebereiche zueinander an verschiedenen Winkelpositionen um die Drehachse (D) herum angeordnet sind.

9. Drehdurchführung (1) nach einem der von vorgenannten Ansprüche, **dadurch gekennzeichnet, dass** zwischen zwei der wenigstens zwei Leitungskanäle ein Durchführungskanal (18) zur Durchführung eines Kabels (17) und/oder einer Druckmittelleitung (3, 4) entlang der Welle (W) und/oder Drehachse vorgesehen ist.

10. Drehdurchführung (1) nach einem der von vorgenannten Ansprüche, **dadurch gekennzeichnet, dass** die erste Druckmittelleitung (2, 3, 4) außerhalb des Bereiches des ersten Anschlusses (5, 6, 7) einen Verlauf aufweist, der abschnittsweise von einem parallelen Verlauf zur Drehachse (D) abweicht.

11. Drehdurchführung (1) nach einem der von vorgenannten Ansprüche, **dadurch gekennzeichnet, dass** die Drehdurchführung wenigstens teilweise durch ein additives Fertigungsverfahren und/oder durch ein 3D-Druck-Verfahren hergestellt ist.

12. Drehdurchführung (1) nach einem der von vorgenannten Ansprüche, **dadurch gekennzeichnet, dass** die Drehdurchführung vollständig durch ein additives Fertigungsverfahren und/oder durch ein 3D-Druck-Verfahren hergestellt ist.
